# EUROPEAN PATENT APPLICATION

(11) **EP 4 797 888 A1**
(43) Date of publication of application: **26.08.2026**
(21) Application number: 24894362.3
(22) Date of filing: 02.10.2024
(51) Int. Cl.: H05K 5/03, H05K 5/02, H04M 1/02, G06F 1/16, C09J 7/00

(54) **ELECTRONIC DEVICE INCLUDING COVER PLATE HAVING SUPPORT MEMBER DISPOSED THEREON**

(30) Priority: 21.11.2023 KR 20230162075; 02.01.2024 KR 20240000134
(71) Applicant: Samsung Electronics Co., Ltd., Suwon-si, Gyeonggi-do 16677 (KR)
(72) Inventor: KIM, Younggyun, Suwon-si Gyeonggi-do 16677 (KR); KIM, Junyeon, Suwon-si Gyeonggi-do 16677 (KR); HONG, Ingook, Suwon-si Gyeonggi-do 16677 (KR); YANG, Yunmo, Suwon-si Gyeonggi-do 16677 (KR)
(74) Representative: Gulde & Partner
(86) International application number: PCT/KR2024/014975
(87) International publication number: WO 2025/110466

(57) **Abstract**

This electronic device may comprise: a housing including a first surface and a second surface opposite to the first surface, the housing comprising a cover plate including a first plate surface forming at least a part of the second surface and a second plate surface opposite to the first plate surface; and a support member disposed on the second plate surface of the cover plate. The cover plate may comprise: a cover member at least a part of which is exposed to the outside; and an optical layer arranged on the cover member in the direction of the second plate surface and comprising a UV molding material. The support member may comprise: a base layer; and an adhesive layer which is arranged on the base layer to face the cover plate and comprises an adhesive material, and at least a part of which is attached to the cover plate. The adhesive layer may comprise: a plurality of adhesive portions attached directly to the cover plate and spaced apart from each other to form a predetermined pattern; and a non-adhesive portion not adhered to the cover plate.

## Description

### TECHNICAL FIELD

The disclosure relates to an electronic device including a cover plate having a support member disposed thereon.

### BACKGROUND ART

Electronic devices, for example, mobile devices such as smartphones, are being developed at a rapid pace. Portability may be one of the most important features of these mobile devices, and efforts are continuously being made to make smartphones smaller, lighter, and slimmer. A molding layer may be disposed on a cover plate of a smartphone to form an optical texture of the smartphone. Various studies are being conducted to ensure that the molding layer does not provide a visual sense of incongruity to consumers.

The above information is presented as related art only to assist with an understanding of the disclosure. No determination has been made, and no assertion is made, as to whether any of the above might be applicable as prior art with regard to the disclosure.

### DISCLOSURE OF THE INVENTION

### TECHNICAL SOLUTIONS

In an embodiment, an electronic device may include a housing including a first surface and a second surface opposite to the first surface, the housing including a cover plate including a first plate surface forming at least a portion of the second surface and a second plate surface opposite to the first plate surface, and a support member disposed on the second plate surface of the cover plate. The cover plate may include a cover member at least a portion of which is exposed to the outside, and an optical layer disposed on the cover member toward the second plate surface and including an ultraviolet (UV) molding material. The support member may include a base layer, and an adhesive layer disposed on the base layer to face the cover plate, including an adhesive material, and at least a portion of which is adhered to the cover plate. The adhesive layer may include a plurality of adhesive portions that is directly adhered to the cover plate and spaced apart from each other to form a predetermined pattern, and a non-adhesive portion that is not adhered to the cover plate.

In an embodiment, an electronic device may include a housing including a first surface and a second surface opposite to the first surface, the housing including a cover plate including a first plate surface forming at least a portion of the second surface and a second plate surface opposite to the first plate surface, and a support member disposed on the second plate surface of the cover plate. The cover plate may include a cover member at least a portion of which is exposed to the outside, and an optical layer disposed on the cover member toward the second plate surface and including a UV molding material. The support member may include a base layer, an adhesive layer disposed on the base layer to face the cover plate, including an adhesive material, and at least a portion of which is adhered to the cover plate, a buffer portion disposed on the base layer in a direction opposite to the adhesive layer, and a cover layer disposed on a side of the adhesive layer to face the cover plate. The adhesive layer may include a plurality of adhesive portions that is directly adhered to the cover plate and spaced apart from each other to form a predetermined pattern, and a non-adhesive portion that is not adhered to the cover plate. The cover layer may include a plurality of through holes that penetrate the surface of the cover layer and overlap each of the plurality of adhesive portions.

In an embodiment, an electronic device may include a housing including a first surface and a second surface opposite to the first surface, the housing including a cover plate including a first plate surface forming at least a portion of the second surface and a second plate surface opposite to the first plate surface, and a support member disposed on the second plate surface of the cover plate, a display disposed on the first surface of the housing and visually exposed to the outside, a front frame disposed in an internal space of the housing, and a battery supported by the front frame. The cover plate may include a cover member at least a portion of which is exposed to the outside, and an optical layer disposed on the cover member toward the second plate surface and including a UV molding material. The support member may include a base layer, an adhesive layer disposed on the base layer to face the cover plate, including an adhesive material, and at least a portion of which is adhered to the cover plate, a buffer portion disposed on the base layer in a direction opposite to the adhesive layer, and a cover layer disposed on a side of the adhesive layer to face the cover plate. The adhesive layer may include a plurality of adhesive portions that is directly adhered to the cover plate and spaced apart from each other to form a predetermined pattern, and a non-adhesive portion that is not adhered to the cover plate. The cover layer may include a plurality of through holes that penetrate the surface of the cover layer and overlap each of the plurality of adhesive portions.

### BRIEF DESCRIPTION OF DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment according to an embodiment;
FIG. 2A is a perspective view of an electronic device according to an embodiment viewed in one direction;
FIG. 2B is a perspective view of an electronic device according to an embodiment viewed in another direction;
FIG. 2C is an exploded perspective view of an electronic device according to an embodiment;
FIG. 3A is a perspective view of a cover plate and a support member disposed on the cover plate according to an embodiment;
FIG. 3B is a cross-sectional view taken along line A-A' of FIG. 3A;
FIG. 3C is a diagram illustrating an enlarged view of region B of FIG. 3B;
FIG. 4A is a perspective view of a support member according to an embodiment;
FIG. 4B is an exploded perspective view of a support member according to an embodiment;
FIG. 4C is a diagram illustrating a flow path of moisture particles on a surface of a support member according to an embodiment;
FIG. 4D is a diagram illustrating a cut portion formed on a surface of a support member according to an embodiment; and
FIG. 5 is a perspective view of a cover plate and a support member disposed along a peripheral direction of the cover plate according to an embodiment.

### MODE FOR CARRYING OUT THE INVENTION

Hereinafter, embodiments will be described in detail with reference to the accompanying drawings. When describing the embodiments with reference to the accompanying drawings, like reference numerals refer to like components and a repeated description related thereto will be omitted.

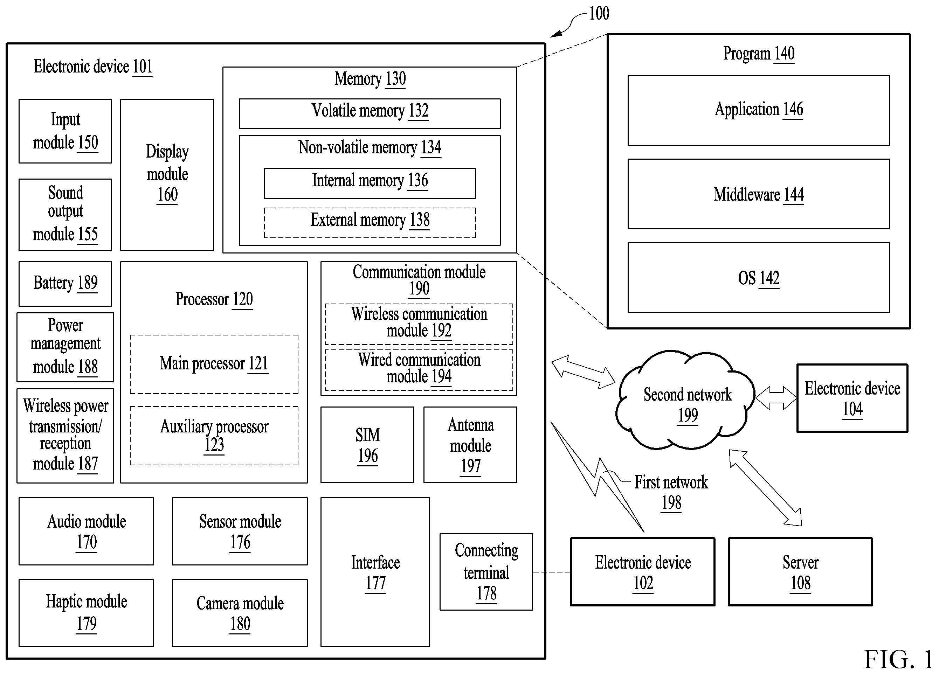

FIG. 1 is a block diagram illustrating an electronic device in a network environment according to various embodiments. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing a recording. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102 (e.g., a speaker or headphones) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device). According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the foldable electronic device 101). For example, a processor (e.g., the processor 120) of the machine (e.g., the foldable electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

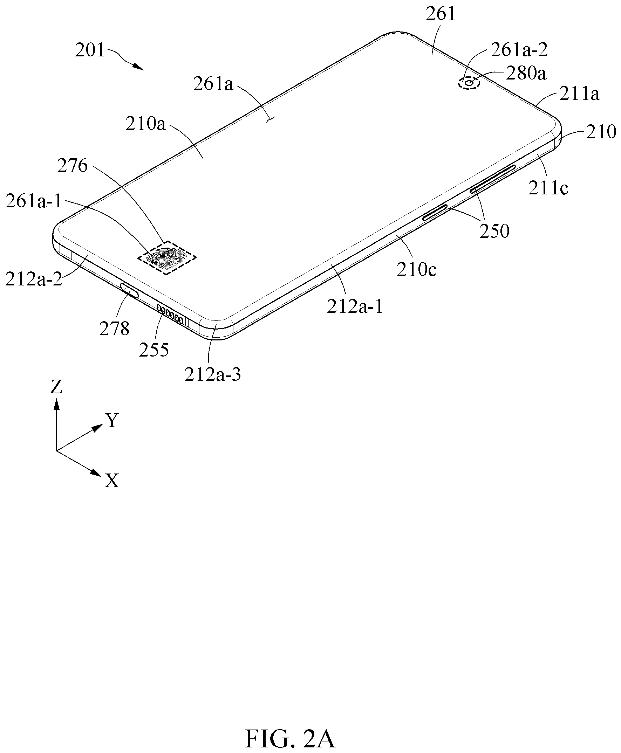

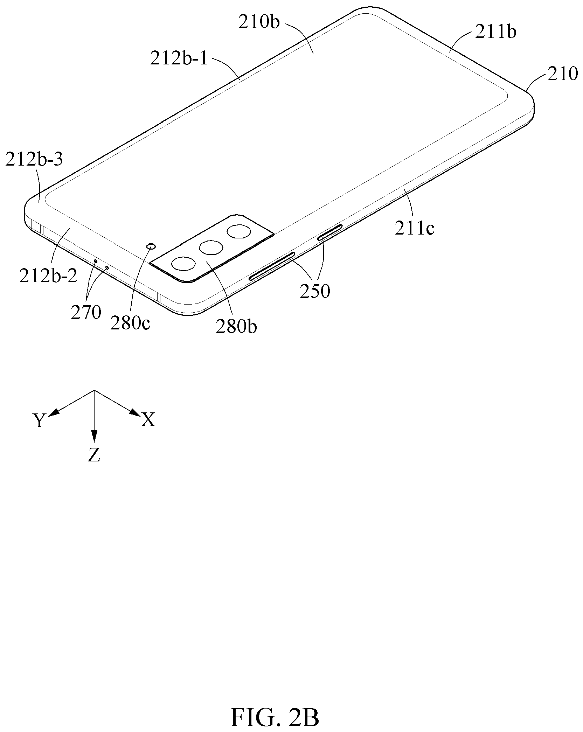

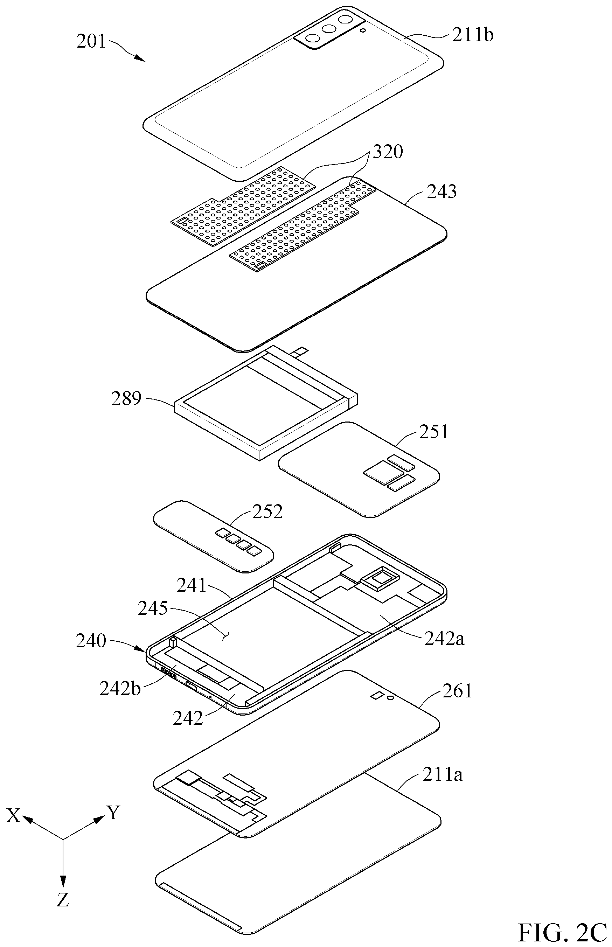

FIG. 2A is a perspective view of an electronic device according to an embodiment viewed in one direction, FIG. 2B is a perspective view of an electronic device according to an embodiment viewed in another direction, and FIG. 2C is an exploded perspective view of an electronic device according to an embodiment.

Referring to FIGS. 2A to 2C, an electronic device 201 according to an embodiment (e.g., the electronic device 101 of FIG. 1) may include a housing 210 having a first surface 210a (e.g., a front side), a second surface 210b (e.g., a rear side), and a third surface 210c (e.g., a lateral side) surrounding a space between the first surface 210a and the second surface 210b.

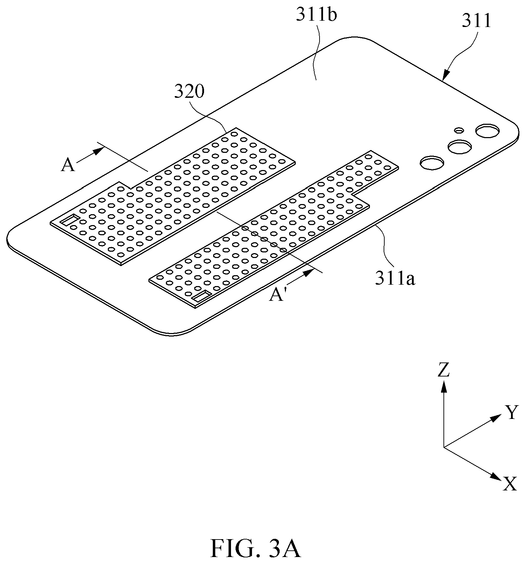

In an embodiment, the first surface 210a may be formed by a first plate 211a of which at least one portion is substantially transparent. For example, the first plate 211a may include a glass plate or a polymer plate including at least one coating layer. In an embodiment, the second surface 210b may be formed by a second plate 211b (e.g., a cover plate 311 of FIG. 3A) that is substantially opaque. For example, the second plate 211b may be formed of coated or colored glass, ceramic, polymer, metal (e.g., aluminum, stainless steel (STS), or magnesium), or a combination thereof. In an embodiment, the third surface 210c may be formed by a frame 211c that is coupled to the first plate 211a and the second plate 211b and includes metal and/or polymer. In an embodiment, the second plate 211b and the frame 211c may be seamlessly integrally formed. In an embodiment, the second plate 211b and the frame 211c may be formed of substantially the same material (e.g., aluminum).

In an embodiment, the first plate 211a may include a plurality of first edge regions 212a-1. The plurality of first edge regions 212a-1 may face the second plate 211b from at least a portion of the first surface 210a. The plurality of first edge regions 212a-1 may be in contact with the frame 211c. The plurality of first edge regions 212a-1 may extend in one direction (e.g., a +/-Y direction). The first plate 211a may include a plurality of second edge regions 212a-2. The plurality of second edge regions 212a-2 may face the second plate 211b from at least a portion of the first surface 210a. The plurality of second edge regions 212a-2 may be in contact with the frame 211c. The plurality of second edge regions 212a-2 may extend in a direction (e.g., a +/-X direction) different from an extension direction (e.g., a +/-Y direction) of the plurality of first edge regions 212a-1. The first plate 211a may include a plurality of third edge regions 212a-3. The plurality of third edge regions 212a-3 may face the second plate 211b from at least a portion of the first surface 210a. The plurality of third edge regions 212a-3 may be in contact with the frame 211c. The plurality of third edge regions 212a-3 may be arranged between the plurality of first edge regions 212a-1 and the plurality of second edge regions 212a-2.

In an embodiment, the second plate 211b may include a plurality of fourth edge regions 212b-1. The plurality of fourth edge regions 212b-1 may face the first plate 211a from at least a portion of the second surface 210b. The plurality of fourth edge regions 212b-1 may be in contact with the frame 211c. The plurality of fourth edge regions 212b-1 may extend in one direction (e.g., a +/-Y direction). The second plate 211b may include a plurality of fifth edge regions 212b-2. The plurality of fifth edge regions 212b-2 may face the first plate 211a from at least a portion of the second surface 210b. The plurality of fifth edge regions 212b-2 may be in contact with the frame 211c. The plurality of fifth edge regions 212b-2 may extend in a direction (e.g., a +/-X direction) different from an extension direction (e.g., a +/-Y direction) of the plurality of fourth edge regions 212b-1. The second plate 211b may include a plurality of sixth edge regions 212b-3. The plurality of sixth edge regions 212b-3 may face the first plate 211a from at least a portion of the second surface 210b. The plurality of sixth edge regions 212b-3 may be in contact with the frame 211c. The plurality of sixth edge regions 212b-3 may be arranged between the plurality of fourth edge regions 212b-1 and the plurality of fifth edge regions 212b-2.

In an embodiment, the electronic device 201 may include a display 261 (e.g., the display module 160 of FIG. 1). In an embodiment, the display 261 may be positioned on the first surface 210a. In an embodiment, the display 261 may be visible through at least a portion (e.g., the plurality of first edge regions 212a-1, the plurality of second edge regions 212a-2, and/or the plurality of third edge regions 212a-3) of the first plate 211a. In an embodiment, the display 261 may have a shape substantially identical to a shape of an outer edge of the first plate 211a. In some embodiments, the edge of the display 261 may substantially coincide with the outer edge of the first plate 211a.

In an embodiment, the display 261 may include a touch sensing circuit, a pressure sensor adapted to measure the intensity (pressure) of a touch, and/or a digitizer configured to detect a magnetic field-type stylus pen.

In an embodiment, the display 261 may include a screen display region 261a that is visually exposed and displays content through pixels. In an embodiment, the screen display region 261a may include a sensing region 261a-1. The sensing region 261a-1 may overlap with at least a portion of the screen display region 261a. The sensing region 261a-1 may allow transmission of an input signal related to a sensor module 276 (e.g., the sensor module 176 of FIG. 1). The sensing region 261a-1 may display content similarly to the screen display region 261a that does not overlap with the sensing region 261a-1. For example, the sensing region 261a-1 may display content while the sensor module 276 is not operating. At least a portion of a camera region 261a-2 may overlap with the screen display region 261a. In an embodiment, the screen display region 261a may include the camera region 261a-2. The camera region 261a-2 may allow transmission of an optical signal related to a first camera module 280a (e.g., the camera module 180 of FIG. 1). At least a portion of the camera region 261a-2 overlapping the screen display region 261a may display content similarly to the screen display region 261a that does not overlap with the camera region 261a-2. For example, the camera region 261a-2 may display content while the first camera module 280a is not operating.

In an embodiment, the electronic device 201 may include an audio module 270 (e.g., the audio module 170 of FIG. 1). In an embodiment, the audio module 270 may be positioned on the third surface 210c. In an embodiment, the audio module 270 may acquire sound through at least one hole.

In an embodiment, the electronic device 201 may include the sensor module 276. In an embodiment, the sensor module 276 may be positioned on the first surface 210a. The sensor module 276 may form the sensing region 261a-1 on at least a portion of the screen display region 261a. The sensor module 276 may receive an input signal passing through the sensing region 261a-1 and generate an electric signal based on the received input signal. For example, the input signal may have a specified physical quantity (e.g., heat, light, temperature, sound, pressure, or ultrasound). For example, the input signal may include a signal related to biometric information (e.g., a fingerprint) of a user.

In an embodiment, the electronic device 201 may include the first camera module 280a (e.g., the camera module 180 of FIG. 1). In an embodiment, the first camera module 280a may be positioned on the first surface 210a. In an embodiment, at least a portion of the first camera module 280a may be positioned below the display 261. In an embodiment, the first camera module 280a may receive an optical signal that passes through the camera region 261a-2.

In an embodiment, the electronic device 201 may include a second camera module 280b (e.g., the camera module 180 of FIG. 1). The second camera module 280b may be positioned on the second surface 210b. In an embodiment, the second camera module 280b may include a plurality of camera modules (e.g., a dual camera, a triple camera, or a quad camera).

In an embodiment, the electronic device 201 may include a flash 280c. The flash 280c may be positioned on the second surface 210b. In an embodiment, the flash 280c may include a light emitting diode or a xenon lamp.

In an embodiment, the electronic device 201 may include a sound output module 255 (e.g., the sound output module 155 of FIG. 1). In an embodiment, the sound output module 255 may be positioned on the third surface 210c. In an embodiment, the sound output module 255 may include one or more holes.

In an embodiment, the electronic device 201 may include an input module 250 (e.g., the input module 150 of FIG. 1). In an embodiment, the input module 250 may be positioned on the third surface 210c. In an embodiment, the input module 250 may include at least one key input device.

In an embodiment, the electronic device 201 may include a connecting terminal 278 (e.g., the connecting terminal 178 of FIG. 1). In an embodiment, the connecting terminal 278 may be positioned on the third surface 210c. For example, when the electronic device 201 is viewed in one direction (e.g., a +Y direction), the connecting terminal 278 may be positioned on a substantially central portion of the third surface 210c, and the sound output module 255 may be positioned on a side (e.g., a right side) with respect to the connecting terminal 278.

In an embodiment, the electronic device 201 may include a front frame 240, a first circuit board 251, a second circuit board 252, and a battery 289 (e.g., the battery 189 of FIG. 1). At least a portion of the front frame 240 may form the housing 210 together with the first plate 211a and the second plate 211b.

In an embodiment, the front frame 240 may include a first frame structure 241, a second frame structure 243, and a plate structure 242. The first frame structure 241 may surround the edge of the plate structure 242. The first frame structure 241 may connect the edge of the first plate 211a and the edge of the second plate 211b. The first frame structure 241 may surround a space between the first plate 211a and the second plate 211b. At least a portion of the first frame structure 241 may form the third surface 210c of the electronic device 201. The second frame structure 243 may be positioned between the first frame structure 241 and the second plate 211b. The first frame structure 241 and the second frame structure 243 may at least partially form the frame 211c. The plate structure 242 may include a first portion 242a that accommodates the first circuit board 251 and a second portion 242b that accommodates the second circuit board 252. The display 261 may be positioned on one side (e.g., a lower surface or a +Z-axis direction) of the plate structure 242. The first circuit board 251 and the second circuit board 252 may be positioned on the other side (e.g., an upper surface or a -Z-axis direction) of the plate structure 242. In an embodiment, the plate structure 242 may include an opening 245. The opening 245 may be positioned between the first portion 242a and the second portion 242b. The opening 245 may pass through both sides of the plate structure 242. The opening 245 may accommodate the battery 289.

Meanwhile, one or more of the embodiments disclosed herein may be applied to electronic devices (e.g., foldable electronic devices, slideable electronic devices, digital cameras, digital video cameras, tablets, note-shaped electronic devices, and other electronic devices) of various shapes/forms in addition to the electronic device illustrated in FIGS. 2A to 2C.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an ASIC.

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., CD-ROM), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

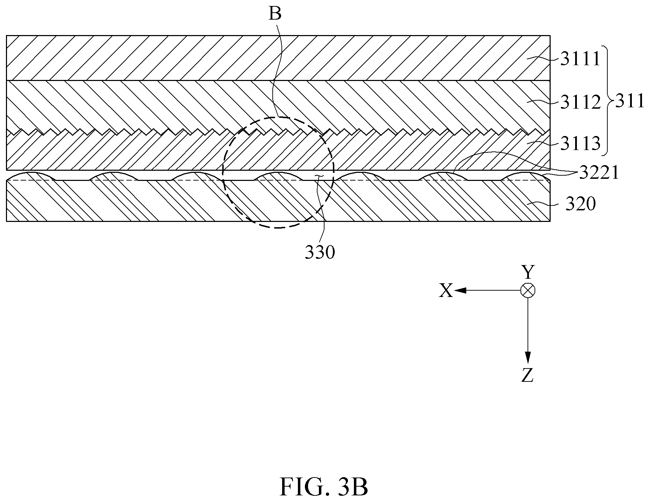

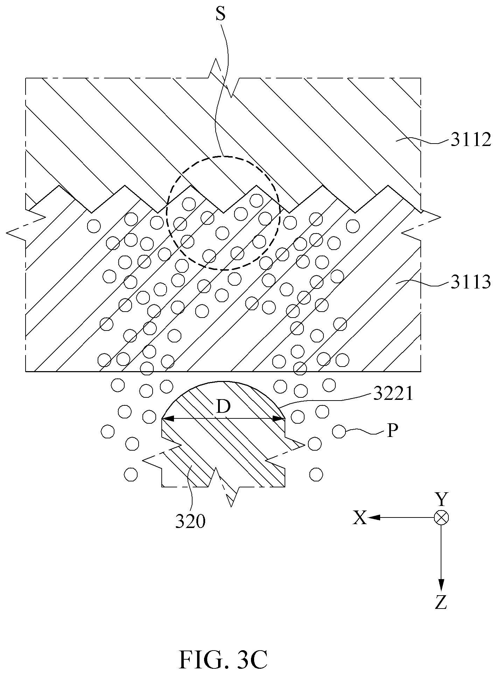

FIG. 3A is a perspective view of the cover plate 311 and a support member 320 disposed on the cover plate 311 according to an embodiment, FIG. 3B is a cross-sectional view taken along line A-A' of FIG. 3A, and FIG. 3C is an enlarged view of region B of FIG. 3B.

Referring to FIGS. 3A to 3C, an electronic device (e.g., the electronic device 201 of FIG. 2A) according to an embodiment may include a housing (e.g., the housing 210 of FIG. 2A) forming at least a portion of an outer surface of the electronic device, a front frame (e.g., the front frame 240 of FIG. 2C) disposed in an internal space of the housing, a battery (e.g., the battery 189 of FIG. 1 or the battery 289 of FIG. 2C) supported by the front frame, the support member 320 disposed on the cover plate 311 of the housing, a flow region 330 through which moisture particles introduced from outside the electronic device may flow, and a display (e.g., the display 261 of FIG. 2A) disposed on a first surface of the housing and visually exposed to the outside.

In an embodiment, the housing may include a first surface (e.g., the first surface 210a of FIG. 2A), a second surface (e.g., the second surface 210b of FIG. 2B) opposite the first surface, and a side surface (e.g., the side surface 210c of FIG. 2A) surrounding an internal space between the first surface and the second surface. In an embodiment, the housing may include the cover plate 311 (e.g., the second plate 211b of FIG. 2B) forming at least a portion of the second surface.

In an embodiment, the cover plate 311 may form at least a portion of an outer surface of the housing. In an embodiment, the cover plate 311 may include a first plate surface 311a and a second plate surface 311b opposite to the first plate surface 311a. In an embodiment, the first plate surface 311a may form at least a portion of the second surface (e.g., the second surface 210b of FIG. 2B) of the housing (e.g., the housing 210 of FIG. 2B). In an embodiment, the cover plate 311 may be at least partially exposed to the outside of the electronic device. The cover plate 311 may protect components disposed in an internal space of the electronic device from external impact.

In an embodiment, the cover plate 311 may include a cover member 3111 at least partially exposed to the outside of the electronic device, an optical layer 3112 disposed on the cover member 3111, and a printed layer 3113 disposed on the optical layer 3112.

In an embodiment, the optical layer 3112 may be disposed on the cover member 3111 toward the second plate surface 311b (e.g., in a +Z-axis direction of FIG. 3A). In an embodiment, the optical layer 3112 may be disposed adjacent to the second surface of the housing to form an optical texture of at least a portion of the housing. In an embodiment, at least a portion of the optical layer 3112 may be formed as an ultraviolet (UV) molding layer. In an embodiment, the printed layer 3113 may be disposed on the optical layer 3112 toward the second plate surface. In an embodiment, the printed layer 3113 may be disposed between the optical layer 3112 and the support member 320 described below.

In an embodiment, the support member 320 may be disposed on the second plate surface 311b of the cover plate 311. In an embodiment, the support member 320 may be attached to the optical layer 3112 of the cover plate 311. In an embodiment, in a state in which the support member 320 is attached to the optical layer 3112, the support member 320 may be disposed on the cover plate 311 to be in contact with the battery supported by the front frame disposed in the internal space of the housing. In an embodiment, the support member 320 may prevent or reduce play caused by a gap formed between the battery and the cover plate 311 when the battery expands or contracts during use of the electronic device. In an embodiment, the support member 320 may include a plurality of adhesive portions 3221 formed to protrude toward the cover plate 311.

In an embodiment, the plurality of adhesive portions 3221 may be formed to protrude from the surface of the support member 320 toward the cover plate 311. In an embodiment, the plurality of adhesive portions 3221 may be adhered to the printed layer 3113 disposed toward the second plate surface 311b of the cover plate 311. In an embodiment, the plurality of adhesive portions 3221 may be arranged spaced apart from each other at a predetermined distance on the surface of the support member 320. In an embodiment, the plurality of adhesive portions 3221 may be formed to protrude from the surface of the support member 320 and arranged spaced apart from each other, thereby forming the flow region 330 between the support member 320 and the cover plate 311. In an embodiment, moisture particles introduced from outside the electronic device may flow through the flow region 330 formed between the support member 320 and the cover plate 311. In an embodiment, the plurality of adhesive portions 3221 may be formed of a waterproof material, and moisture particles may flow between the plurality of adhesive portions 3221. In an embodiment, moisture particles flowing in the flow region 330 may flow from the flow region 330 to the optical layer 3112 of the cover plate 311.

In an embodiment, a moisture gradient may occur on a surface of the optical layer 3112 due to a difference in density of the moisture particles. In an embodiment, a large moisture gradient size on the surface of the optical layer 3112 may indicate that moisture diffusion on the surface of the optical layer 3112 is not widespread, and a small moisture gradient size may indicate that moisture diffusion is widespread. In an embodiment, when the size of the moisture gradient on the surface of the optical layer 3112 is greater than a predetermined value, the optical layer 3112 may be viewed to the outside through the first plate surface 311a of the cover plate 311 due to a difference in reflectivity caused by a difference in density of the moisture particles.

In an embodiment, when the diffusion of moisture particles across the surface of the optical layer 3112 is widespread, the magnitude of the moisture gradient may be substantially constant. In an embodiment, when the diffusion of moisture particles on the surface of the optical layer 3112 does not exceed a predetermined level, the moisture particles may be concentrated and distributed in a specific region of the surface of the optical layer 3112, and the size of the moisture gradient may increase. In an embodiment, the magnitude of the moisture gradient may be proportional to a diameter D of an adhesive portion. In an embodiment, when the diameter D of an adhesive portion is excessively large, the size of the moisture gradient may increase as the diffusion movement of moisture particles P to a surface region S of the optical layer 3112 overlapping the adhesive portion is restricted. In an embodiment, as the diameter D of the adhesive portion is smaller, the size of the moisture gradient may be reduced as the moisture particles P are free to diffuse to the surface region S of the optical layer 3112 overlapping the adhesive portion. In an embodiment, the magnitude of the moisture gradient on the surface of the optical layer 3112 may be inversely proportional to a distance formed between a pair of adjacent adhesive portions. In an embodiment, the greater the distance formed between the adhesive portions, the wider the diffusion of moisture particles in the flow region 330, and the wider the diffusion of moisture particles from the flow region 330 to the surface of the optical layer 3112, thereby reducing the size of the moisture gradient.

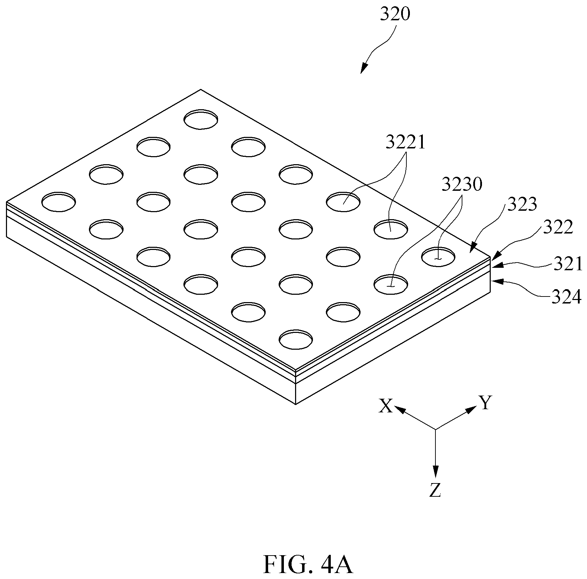

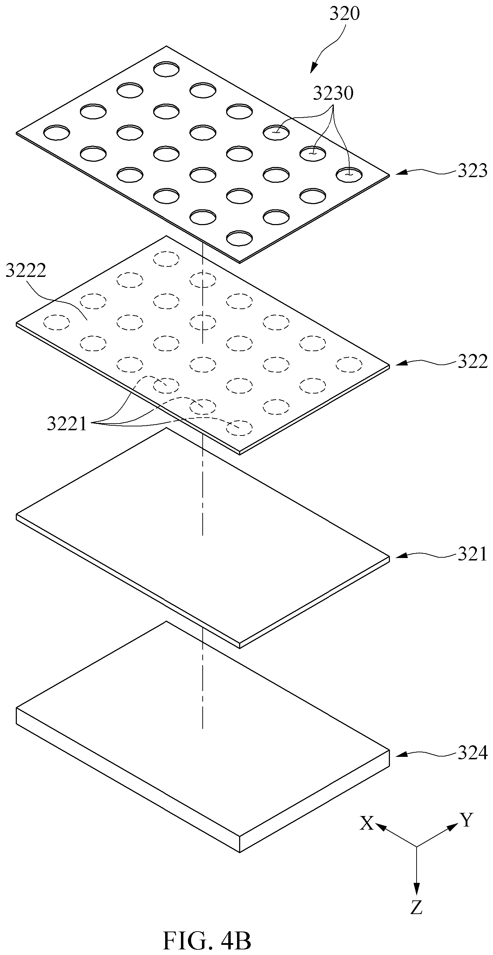

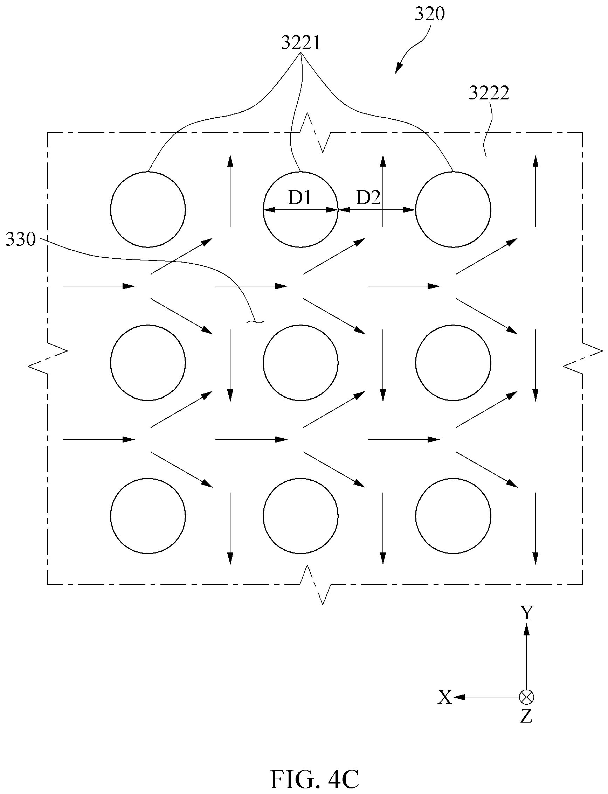

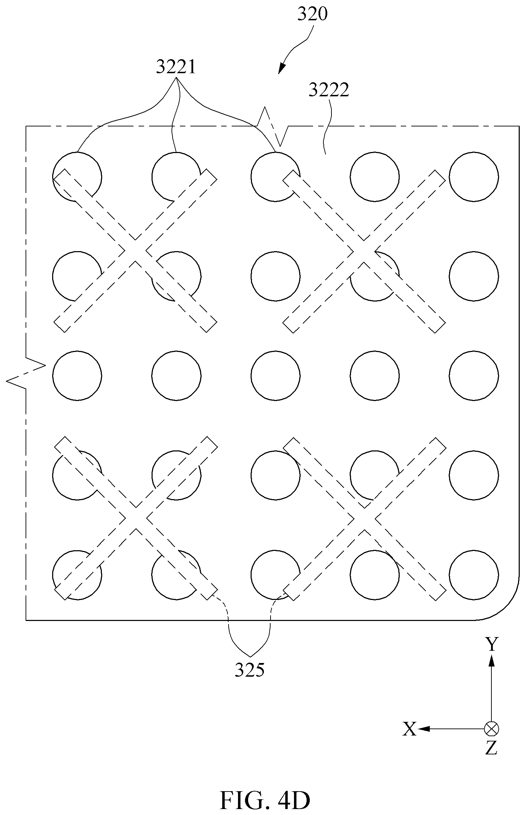

FIG. 4A is a perspective view of the support member 320 according to an embodiment, FIG. 4B is an exploded perspective view of the support member 320 according to an embodiment, FIG. 4C a diagram illustrating a flow path of moisture particles on a surface of the support member 320 according to an embodiment, and FIG. 4D is a diagram illustrating a cut portion formed on a surface of the support member 320 according to an embodiment.

Referring to FIGS. 4A to 4D, the support member 320 according to an embodiment may include a base layer 321, an adhesive layer 322 disposed on one surface of the base layer 321, a buffer portion 324 disposed on the other surface of the base layer 321, and a cover layer 323 disposed on the adhesive layer 322 to face the cover member 3111.

In an embodiment, the base layer 321 may form a substrate layer of the support member 320. In an embodiment, the base layer 321 may be formed with an adhesive material on both sides. In an embodiment, the base layer 321 may perform a function of bonding a plurality of layers forming the support member 320 to each other. In an embodiment, the base layer 321 may include a polyethylene terephthalate (PET) material.

In an embodiment, the cover layer 323 may be disposed on the base layer 321 to face (e.g., in a -Z-axis direction of FIG. 4A) the cover member 3111 (e.g., the cover member 3111 of FIG. 3B). In an embodiment, the cover layer 323 may form at least a portion of the surface of the support member 320. In an embodiment, the cover layer 323 may include a plurality of through holes 3230. In an embodiment, the plurality of through holes 3230 may be formed through the surface of the cover layer 323. In an embodiment, the plurality of through holes 3230 may be formed to have substantially the same size and spaced apart from each other by a predetermined distance. In an embodiment, the plurality of through holes 3230 may have at least one of a circular and a polygonal shape. In an embodiment, the plurality of through holes 3230 may have substantially the same shape or may have different shapes. For example, all of the plurality of through holes 3230 may have a circular or polygonal shape. For example, at least some of the plurality of through holes 3230 may have a circular shape, and the remaining some may have a polygonal shape.

In an embodiment, the adhesive layer 322 may be disposed on the base layer 321 to face (e.g., in a -Z-axis direction of FIG. 4A) the cover member 3111 (e.g., the cover member 3111 of FIG. 3B). For example, the adhesive layer 322 may be disposed between the cover layer 323 and the base layer 321. In an embodiment, the adhesive layer 322 may include an adhesive material (e.g., a pressure sensitive adhesive (PSA) or optical clear adhesive (OCA)). In an embodiment, at least a portion of the adhesive layer 322 may be adhered to the cover member 3111. For example, the adhesive layer 322 may include the plurality of adhesive portions 3221 directly adhered to the cover member 3111 and a non-adhesive portion 3222 that is not adhered to the cover member 3111.

In an embodiment, the plurality of adhesive portions 3221 may be formed spaced apart from each other to form a predetermined pattern. In an embodiment, a pattern formed by the plurality of adhesive portions 3221 spaced apart from each other may include a micropattern that forms the flow region 330 that at least partially overlaps the adhesive layer 322.

In an embodiment, the plurality of adhesive portions 3221 may be formed at positions overlapping the plurality of through holes 3230 formed on the surface of the cover layer 323. In an embodiment, the plurality of adhesive portions 3221 of the adhesive layer 322 may have substantially the same shape as the plurality of through holes 3230 of the cover layer 323. In an embodiment, the plurality of adhesive portions 3221 may pass through the plurality of through holes 3230 formed on the surface of the cover layer 323. For example, based on a direction (e.g., a -Z-axis direction of FIG. 4A) facing the cover member 3111, the cover layer 323 may be disposed on top of the adhesive layer 322. In an embodiment, when the support member 320 is attached to the cover member 3111, at least a portion (e.g., the plurality of adhesive portions 3221) of the adhesive layer 322 may be adhered to the cover member 3111 by passing through the plurality of through holes 3230 formed on the surface of the cover layer 323. For example, the plurality of adhesive portions 3221 of the adhesive layer 322 may be formed to protrude relatively toward the cover member 3111 compared to the non-adhesive portion 3222 of the adhesive layer 322.

In an embodiment, a diameter D1 of each of the plurality of adhesive portions 3221 may be less than or equal to a distance D2 formed between a pair of adjacent adhesive portions. The size of a moisture gradient on a surface of the optical layer 3112 according to an embodiment (e.g., the optical layer 3112 3112 of FIG. 3B) may be proportional to the diameter length D1 of each of the plurality of adhesive portions 3221 and inversely proportional to the distance D2 formed between a pair of adjacent adhesive portions. In an embodiment, to minimize the size of the moisture gradient on the surface of the optical layer 3112, the diameter of each of the plurality of adhesive portions 3221 may be formed as small as possible (e.g., 0.3 mm to 1.2 mm), and the distance formed between a pair of adjacent adhesive portions may be formed as large as possible (e.g., 0.5 mm to 1.2 mm).

In an embodiment, the buffer portion 324 of the support member 320 may be disposed on the base layer 321 in a direction opposite (e.g., a +Z-axis direction of FIG. 4A) to the adhesive layer 322. In an embodiment, the buffer portion 324 of the support member 320 may be formed of a compressible and restorable porous material (e.g., a foam sponge material or a sponge material in the form of hollow microparticles). In an embodiment, the buffer portion 324 may prevent or reduce any play that may occur between the cover plate 311 and a front frame or the cover plate 311 and a battery. For example, the support member 320 may be disposed between a front frame (e.g., the front frame 240 of FIG. 2C) disposed in an internal space of the housing and the cover plate 311, and the buffer portion 324 of the support member 320 may be in contact with the front frame. In an embodiment, the buffer portion 324 of the support member 320 may be in contact with a battery supported by the front frame. In an embodiment, the buffer portion 324 of the support member 320 may compensate for any play that may occur between the cover plate 311 and the battery when the battery expands or contracts during use of the electronic device.

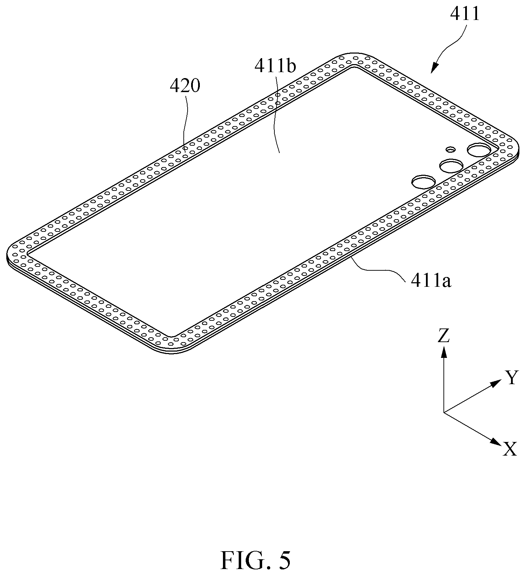

In an embodiment, a cut portion 325 may be formed on the surface of the support member 320. In an embodiment, the cut portion 325 may be formed through the surface of the support member 320. In an embodiment, the cut portion 325 may perform a function of discharging air bubbles formed between the support member 320 and the optical layer 3112 of the cover plate 311 while the support member 320 is attached to the cover plate 311. In an embodiment, the cut portion 325 may be formed in at least one of a linear slit (e.g., see the cut portion 325 of FIG. 5) and a circular shape (e.g., a through hole).

FIG. 5 is a perspective view of a cover plate and a support member disposed along a peripheral direction of the cover plate according to an embodiment.

Referring to FIG. 5, a cover plate 411 according to an embodiment (e.g., the cover plate 311 of FIG. 3A) may include a first plate surface 411a (e.g., the first plate surface 311a of FIG. 3A) forming at least a portion of a second surface (e.g., the second surface 201b of FIG. 2B) of an electronic device (e.g., the electronic device 201 of FIG. 2A) and a second plate surface 411b (e.g., the second plate surface 311b of FIG. 3A) opposite to the first plate surface 411a.

In an embodiment, a support member 420 (e.g., the support member 320 of FIG. 3A) may be disposed on the second plate surface 411b of the cover plate 411. For example, the support member 420 may be disposed on the second plate surface 411b along a peripheral direction of the cover plate 411. In an embodiment, the support member 420 may include a buffer portion (e.g., the buffer portion 324 of FIG. 4A) that contacts a front frame (e.g., the front frame 240 of FIG. 2C) disposed in an internal space of the housing. In an embodiment, the surface of the buffer portion facing the front frame may be formed of an adhesive material. In an embodiment, the support member may be attached to the cover plate 411 via a plurality of adhesive portions (e.g., the plurality of adhesive portions 3221 of FIG. 4A) and may be attached to a front frame (e.g., the front frame 240 of FIG. 2C) disposed in the internal space of the housing via the surface of the buffer portion facing the internal space.

In an embodiment, the electronic device 101 or 201 may include the housing 210 including the first surface 210a and the second surface 210b opposite to the first surface 210a, the housing 210 including the cover plate 311 including the first plate surface 311a forming at least a portion of the second surface 210b and the second plate surface 311b opposite to the first plate surface 311a, and the support member 320 disposed on the second plate surface 311b of the cover plate 311. The cover plate 311 may include the cover member 3111 at least a portion of which is exposed to the outside, and the optical layer 3112 disposed on the cover member 3111 toward the second plate surface 311b and including a UV molding material. The support member 320 may include the base layer 321, and the adhesive layer 322 disposed on the base layer 321 to face the cover plate 311, including an adhesive material, and at least a portion of which is adhered to the cover plate 311. The adhesive layer 322 may include the plurality of adhesive portions 3221 that is directly adhered to the cover plate 311 and spaced apart from each other to form a predetermined pattern, and the non-adhesive portion 3222 that is not adhered to the cover plate 311.

In an embodiment, the support member 320 may further include the cover layer 323 disposed on a side of the adhesive layer 322 to face the cover plate 311. The cover layer 323 may include the plurality of through holes 3230 that penetrate the surface of the cover layer 323 and overlap each of the plurality of adhesive portions 3221.

In an embodiment, the non-adhesive portion 3222 of the adhesive layer 322 may be adhered to the cover layer 323, and the plurality of adhesive portions 3221 of the adhesive layer 322 may pass through the plurality of through holes 3230 and may be adhered to the cover plate 311.

In an embodiment, the plurality of adhesive portions 3221 may be formed to protrude relatively toward the cover plate 311 compared to the non-adhesive portion 3222.

In an embodiment, the plurality of through holes 3230 may have at least one of a circular shape and a polygonal shape, and the plurality of adhesive portions 3221 may have a shape substantially the same as the plurality of through holes 3230.

In an embodiment, the support member 320 may further include the buffer portion 324 disposed on the base layer 321 in a direction opposite to the adhesive layer 322.

In an embodiment, the electronic device 101 or 201 may further include the front frame 240 disposed in an internal space of the housing 210, and the support member 320 may be disposed between the cover plate 311 and the front frame 240.

In an embodiment, the electronic device 101 or 201 may further include the battery 189 or 289 supported by the front frame 240, and the buffer portion 324 of the support member 320 may contact an outer surface of the battery 189 or 289.

In an embodiment, the support member 420 may be disposed on an edge of the cover plate 411 along a peripheral direction, and the surface of the buffer portion 324 facing the front frame 240 may include an adhesive material.

In an embodiment, the support member 320 may include the cut portion 325 formed through the surface of the support member 320, and the cut portion 325 may allow a space between the support member 320 and the optical layer 3112 to communicate with the outside.

In an embodiment, the cut portion 325 may be formed in at least one of a linear slit and a circular shape.

In an embodiment, the electronic device 101 or 201 may further include the flow region 330 formed between the cover plate 311 and the cover layer 323 of the support member 320, through which moisture particles introduced from outside the electronic device 101 or 201 may flow along between the plurality of adhesive portions 3221.

In an embodiment, a diameter of each of the plurality of adhesive portions 3221 may be less than or equal to a distance formed between a pair of adjacent adhesive portions 3221.

In an embodiment, the moisture particles may flow from the flow region 330 to the optical layer 3112, and a moisture gradient may occur on the surface of the optical layer 3112 due to a difference in density of the moisture particles.

In an embodiment, the size of the moisture gradient may be proportional to the diameter of the adhesive portion 3221 and inversely proportional to the distance formed between the pair of adjacent adhesive portions 3221.

In an embodiment, the electronic device 101 or 201 may include the housing 210 including the first surface 210a and the second surface 210b opposite to the first surface 210a, the housing 210 including the cover plate 311 including the first plate surface 311a forming at least a portion of the second surface 210b and the second plate surface 311b opposite to the first plate surface 311a, and the support member 320 disposed on the second plate surface 311b of the cover plate 311. The cover plate 311 may include the cover member 3111 at least a portion of which is exposed to the outside, and the optical layer 3112 disposed on the cover member 3111 toward the second plate surface 311b and including a UV molding material. The support member 320 may include the base layer 321, the adhesive layer 322 disposed on the base layer 321 to face the cover plate 311, including an adhesive material, and at least a portion of which is adhered to the cover plate 311, the buffer portion 324 disposed on the base layer 321 in a direction opposite to the adhesive layer 322, and the cover layer 323 disposed on a side of the adhesive layer 322 to face the cover plate 311. The adhesive layer 322 may include the plurality of adhesive portions 3221 that is directly adhered to the cover plate 311 and spaced apart from each other to form a predetermined pattern, and the non-adhesive portion 3222 that is not adhered to the cover plate 311. The cover layer 323 may include the plurality of through holes 3230 that penetrate the surface of the cover layer 323 and overlap each of the plurality of adhesive portions 3221.

In an embodiment, the plurality of adhesive portions 3221 may be disposed to be spaced apart from each other by substantially the same distance on the surface of the adhesive layer 322, and the plurality of adhesive portions 3221 spaced apart from each other may form a micropattern.

In an embodiment, the non-adhesive portion 3222 of the adhesive layer 322 may be adhered to the cover layer 323, and the plurality of adhesive portions 3221 of the adhesive layer 322 may pass through the plurality of through holes 3230 and may be adhered to the cover plate 311, and the plurality of adhesive portions 3221 may be formed to protrude relatively toward the cover plate 311 compared to the non-adhesive portion 3222.

In an embodiment, the electronic device 101 or 201 may further include the flow region 330 formed between the cover layer 323 of the cover plate 311 and the support member 320, and through which moisture particles introduced from outside the electronic device 101 or 201 may flow between the plurality of adhesive portions 3221, wherein a diameter of each of the plurality of adhesive portions 3221 may be less than or equal to a distance formed between a pair of adjacent adhesive portions 3221, the moisture particles may flow from the flow region 330 to the optical layer 3112, a moisture gradient may occur on the surface of the optical layer 3112 due to a difference in density of the moisture particles, and the size of the moisture gradient may be proportional to the diameter of the adhesive portion 3221 and inversely proportional to the distance formed between the pair of adjacent adhesive portions 3221.

In an embodiment, the electronic device 101 or 201 may include the housing 210 including the first surface 210a and the second surface 210b opposite to the first surface 210a, the housing 210 including the cover plate 311 including the first plate surface 311a forming at least a portion of the second surface 210b and the second plate surface 311b opposite to the first plate surface 311a, the support member 320 disposed on the second plate surface 311b of the cover plate 311, a display disposed on the first surface 210a of the housing 210 and visually exposed to the outside, the front frame 240 disposed in an internal space of the housing 210, and the battery 189 or 289 supported by the front frame 240. The cover plate 311 may include the cover member 3111 at least a portion of which is exposed to the outside, and the optical layer 3112 disposed on the cover member 3111 toward the second plate surface 311b and including a UV molding material. The support member 320 may include the base layer 321, the adhesive layer 322 disposed on the base layer 321 to face the cover plate 311, including an adhesive material, and at least a portion of which is adhered to the cover plate 311, the buffer portion 324 disposed on the base layer 321 in a direction opposite to the adhesive layer 322, and the cover layer 323 disposed on a side of the adhesive layer 322 to face the cover plate 311. The adhesive layer 322 may include the plurality of adhesive portions 3221 that is directly adhered to the cover plate 311 and spaced apart from each other to form a predetermined pattern, and the non-adhesive portion 3222 that is not adhered to the cover plate 311. The cover layer 323 may include the plurality of through holes 3230 that penetrate the surface of the cover layer 323 and overlap each of the plurality of adhesive portions 3221.

## Claims

1. An electronic device (101;201) comprising:
a housing (210) including a first surface (210a) and a second surface (210b) opposite to the first surface (210a),
the housing (210) comprising a cover plate (311) including a first plate surface (311a) forming at least a portion of the second surface (210b) and a second plate surface (311b) opposite to the first plate surface (311a); and
a support member (320) disposed on the second plate surface (311b) of the cover plate (311),
wherein the cover plate (311) comprises:
a cover member (3111) at least a portion of which is exposed to an outside; and
an optical layer (3112) disposed on the cover member (3111) toward the second plate surface (311b) and including an ultraviolet (UV) molding material,
and wherein the support member (320) comprises:
a base layer (321); and
an adhesive layer (322) disposed on the base layer (321) to face the cover plate (311), including an adhesive material, and at least a portion of which is adhered to the cover plate (311),
wherein the adhesive layer (322) comprises:
a plurality of adhesive portions (3221) that is directly adhered to the cover plate (311) and formed spaced apart from each other to form a predetermined pattern; and
a non-adhesive portion (3222) that is not adhered to the cover plate (311).

2. The electronic device (101;201) of claim 1, wherein
the support member (320) further comprises:
a cover layer (323) disposed on a side of the adhesive layer (322) to face the cover plate (311),
wherein the cover layer (323) comprises
a plurality of through holes (3230) penetrating a surface of the cover layer (323) and overlapping each of the plurality of adhesive portions (3221).

3. The electronic device (101;201) of claim 1 or 2, wherein
the non-adhesive portion (3222) of the adhesive layer (322) is adhered to the cover layer (323), and
the plurality of adhesive portions (3221) of the adhesive layer (322) passes through the plurality of through holes (3230), and is adhered to the cover plate (311).

4. The electronic device (101;201) of any one of claims 1 to 3, wherein
the plurality of adhesive portions (3221) is formed to protrude relatively toward the cover plate (311) compared to the non-adhesive portion (3222).

5. The electronic device (101;201) of any one of claims 1 to 4, wherein
the plurality of through holes (3230) has at least one of a circular shape and a polygonal shape, and
the plurality of adhesive portions (3221) has substantially the same shape as the plurality of through holes (3230).

6. The electronic device (101;201) of any one of claims 1 to 5, wherein
the support member (320) further comprises:
a buffer portion (324) disposed on the base layer (321) in a direction opposite to the adhesive layer (322).

7. The electronic device (101;201) of any one of claims 1 to 6, further comprising:
a front frame (240) disposed in an internal space of the housing (210),
wherein the support member (320) is disposed between the cover plate (311) and the front frame (240).

8. The electronic device (101;201) of any one of claims 1 to 7, further comprising:
a battery (189;289) supported by the front frame (240),
wherein the buffer portion (324) of the support member (320) is in contact with an outer surface of the battery (189;289).

9. The electronic device (101;201) of any one of claims 1 to 8, wherein
the support member (420) is disposed at an edge of the cover plate (411) along a peripheral direction, and
a surface of the buffer portion (324) facing the front frame (240) includes an adhesive material.

10. The electronic device (101;201) of any one of claims 1 to 9, wherein
the support member (320) comprises:
a cut portion (325) formed through a surface of the support member (320),
wherein the cut portion (325) is configured to allow a space between the support member (320) and the optical layer (3112) to communicate with an outside.

11. The electronic device (101;201) of any one of claims 1 to 10, wherein
the cut portion (325) is formed in at least one of a linear slit and a circular shape.

12. The electronic device (101;201) of any one of claims 1 to 11, further comprising:
a flow region (330) formed between the cover plate (311) and the cover layer (323) of the support member (320), and through which moisture particles introduced from outside the electronic device (101;201) flow between the plurality of adhesive portions (3221).

13. The electronic device (101;201) of any one of claims 1 to 12, wherein
a diameter of each of the plurality of adhesive portions (3221) is less than or equal to a distance formed between a pair of adjacent adhesive portions (3221).

14. The electronic device (101;201) of any one of claims 1 to 13, wherein
the moisture particles flow from the flow region (330) to the optical layer (3112), and
a moisture gradient occurs on a surface of the optical layer (3112) due to a difference in density of the moisture particles.

15. The electronic device (101;201) of any one of claims 1 to 14, wherein
a size of the moisture gradient is proportional to the diameter of the adhesive portion (3221) and inversely proportional to the distance formed between a pair of adjacent adhesive portions (3221).
